# NEUE EUROPÄISCHE PATENTSCHRIFT

(11) **EP 3 323 326 B2**
(45) Veröffentlichungstag und Bekanntmachung des Hinweises auf die Entscheidung über den Einspruch: **24.04.2024**
(45) Hinweis auf die Patenterteilung: 25.11.2020
(21) Anmeldenummer: 17193461.5
(22) Anmeldetag: 27.09.2017
(51) Int. Cl.: A47J 31/46

(54) **GETRÄNKEBEREITER SOWIE VERFAHREN ZUM STEUERN ODER REGELN EINER GETRÄNKEZUBEREITUNG**
BEVERAGE-MAKING MACHINE AND METHOD OF CONTROLLING OR REGULATING THE PREPARATION OF A BEVERAGE
APPAREIL DE PRÉPARATION DE BOISSONS AINSI QUE PROCÉDÉ DE COMMANDE OU DE RÉGLAGE D'UNE PRÉPARATION DE BOISSONS

(30) Priorität: 18.11.2016 DE 102016222812
(43) Veröffentlichungstag der Anmeldung: 23.05.2018
(73) Patentinhaber: WMF GmbH, 73312 Geislingen/Steige (DE)
(72) Erfinder: Bais, Johannes, 89075 Ulm (DE); Schirrmacher, Philipp, 89073 Ulm (DE); Startz, Armin, 89197 Weidenstetten (DE)
(74) Vertreter: Pfenning, Meinig & Partner mbB

(56) Entgegenhaltungen:
- EP-A1- 1 676 509
- EP-A1- 2 526 841
- WO-A1-2007/070037
- WO-A1-2012/072724
- WO-A1-2013/064232
- WO-A1-2013/110500
- WO-A2-2006/052969
- DE-A1-102014 108 281
- ES-T3- 2 366 876
- GB-A- 2 429 063
- flownetix 100series Ultrasonic Flowmeter Technical Data Sheet. April 2011
- flownetix 100series Ultrasonic Flowmeter Technical Data Sheet, October 2008
- Aussage von Mr. Simon Rhodes, ehemaliger CTO von Flownetix
- Technisches Gutachten von Humphrey L Spoor
- deutschsprachige Wikipedia, "Regelungstechnik" 27.10.2016

## Beschreibung

Die Genauigkeit der Ausgabemengen bei Getränkebereitern wird immer wichtiger. Der Kunde erwartet, dass jedes Getränk identisch ausgegeben wird. Differierende Ausgabemengen haben auch Einfluss auf Geschmack und optisches Aussehen: Wird beispielsweise mal mehr oder mal weniger Wasser dosiert, so verändert sich der Kaffeegeschmack, da die vorgegebene, konstante Kaffeemehlmenge durch unterschiedliche Wassermengen extrahiert wird.

Bei der Verarbeitung von Milch (siehe z.B. DE 10 2013 224 786 A1) wäre es vorteilhaft, wenn die dosierte Menge genauer bekannt wäre (was nicht der Fall ist). Die dosierte Milchmasse beeinflusst maßgeblich die Temperatur und im besagten DE 10 2013 224 786 A1 Mischsystem auch die Milchkonsistenz. Störungen für das jeweilige System durch z.B. einen leeren Vorratsbehälter von Milch oder der Wassertank für die Brühwasserzubereitung, sollten ebenfalls erkannt werden (was nicht der Fall ist).

Als weiterer Parameter wäre es sinnvoll, die Temperatur schnell zu erfassen, da oft kleine Getränkemengen verarbeitet werden. Eine Temperaturerfassung gemäß Stand der Technik findet gewöhnlich mit einem zusätzlichen Heißleiterelement oder Kaltleiterelement statt, welches in der Regel im Medium platziert ist.

Zur Mengensteuerung von Brühwasser gibt es heute mehrere Verfahren:
1. Der Wasservordruck und der durch den Erhitzer und das Brühsystem sich bildende Gegendruck sind bekannt oder konstant; damit lässt sich durch eine Zeitsteuerung der Wasserventile eine bestimmte Menge an Wasser oder extrahiertem Kaffeegetränk dosieren.
2. Die Förderleistung der eingebauten Pumpe für die Zubereitung des Getränks ist bekannt. Durch eine zeitgesteuerte Ansteuerung der Pumpe lassen sich bestimmte Ausgabemengen dosieren.
3. Kombination aus 1. und 2.

Aus EP 1 785 074 B1 ist ein Milchsystem bekannt, das mittels einer PeristaltikPumpe den Milchfluss über die Drehzahl des Pumpenmotors steuert und damit bei einer bestimmten Dampfmenge eine bestimmte Ausgabetemperatur einstellt.

Nachteile des Standes der Technik sind wie folgt.

Mechanische Durchflusssensoren sind anfällig für Verschmutzungen und Kalkaufbau. Weiter arbeiten Sie durch die Masseträgheit des Flügelrades ungenau, insbesondere bei pulsierenden Strömungen, welche durch die integrierte Pumpe verursacht werden. Dabei ist der eigentlichen Wasserströmung oft noch eine Frequenz von 50-200 Hz überlagert (z.B. bei Schwingankerpumpen , Flügelzellenpumpen oder der Pulsation von Zahnradpumpen).

In Milchsystemen ist auf eine möglichst totraumfreie Gestaltung zu achten, damit diese "CIP" ("Clean in Place") gereinigt werden können. Mechanische Durchflussmesser bieten hier keine geeignete totraumfreie Gestaltung. Funktionsbedingt können auch Ecken in den Messgeräten nicht mit den erforderlichen hygienegerechten Radien ausgeführt werden.

Solche bekannte Messverfahren bieten keinen Zusatznutzen durch z.B. Erkennen von Luftblasen oder die Messung der Temperatur. Hierzu sind zusätzliche Sensoren notwendig, welche einen zusätzlichen Bauraum und zusätzliche Eingänge auf der elektronischen Steuereinheit benötigen. Weiter sind diese Sensoren mitunter träge, mit entsprechend langer Ansprechzeit oder mit aufwendigen Rechenmodellen zu unterstützen.

Die EP 2 526 841 A1 offenbart ein Heizungsmodul für eine Heißgetränkemaschine enthaltend ein Messsystem zum Erfassen eines Fluid-Durchflusses, wobei das Messsystem einen Durchflussmengenmesser enthält. Die WO 2006/052969 A2 offenbart einen Getränkebereiter enthaltend ein Messsystem zum Erfassen eines Fluid-Durchflusses, wobei das Messsystem einen Flusszähler oder einen Flussmesser enthält. Die ES 2 366 876 T3 und die WO 2012/072724 A1 offenbaren einen Getränkebereiter enthaltend ein Messsystem zum Erfassen eines Fluid-Durchflusses, wobei das Messsystem ein magnetisches Flussmeter mit einem "Hall"-Effekt-Sensor enthält.

Aufgabe der Erfindung ist somit, einen verbesserten Getränkebereiter sowie ein verbessertes Verfahren zum Steuern oder Regeln einer Getränkezubereitung zur Verfügung zu stellen, der bzw. das die o.g. Nachteile vermeidet und dennoch konstruktiv auf möglichste einfache Art und Weise verwirklicht ist und zuverlässig arbeitet.

Diese Aufgabe wird durch einen Getränkebereiter nach Anspruch 1 und ein Verfahren nach Anspruch 8 gelöst. Vorteilhafte Varianten lassen sich den abhängigen Ansprüchen entnehmen.

Nachfolgend wird die Erfindung am Beispiel eines elektrisch betriebenen Kaffeeautomaten (z.B. Kaffeevollautomat) beschrieben (zunächst allgemein, dann an Ausführungsbeispielen). Es können aber auch andere Getränkebereiter erfindungsgemäß realisiert werden. Die Begriffe "Fluid" und "Medium" werden nachfolgend in der Regel synonym verwendet.

Die vorliegende Erfindung hat folgende Grundideen:
- Steuerkreis, besser noch: Regelkreis, zur Einstellung eines Milch-Volumenstroms.
- Getränkebereiter mit einer neuen Art der Mengenmessung von Medien für die Getränkezubereitung (Milch, Trinkschokolade, ...). Dabei wird auf mechanisch bewegte Teile im Medium verzichtet.
- Möglichst hygienische Geometrien für einfache CIP-Reinigung. Um diese Geometrien für eine einfache CIP-Reinigung zu realisieren, können erfindungsgemäß verrundete Übergänge verwendet werden. Zudem kann dafür gesorgt werden, dass es keine Toträume im Fluidpfad gibt.
- Erkennung von Unterbrechungen der Fluidversorgung (Luftblasen im System): Durch Luftblasen im Fluid ändert sich die Schallgeschwindigkeit und die Dämpfung des Signals, das heißt, Luft verlangsamt die Schallgeschwindigkeit und dämpft das Signal. Dies kann erfindungsgemäß erfasst bzw. detektiert werden
- Erkennung von leeren Behältern durch die Messung von Luftblasen oder Erkennung von fehlendem Medienstrom trotz angesteuerter Fördermittel (bei z.B. "BagInBox"-Systeme).
- Sehr schnelle Messung der Temperatur des durchströmenden Fluids.
- Reaktion der Maschine auf die gemessenen Größen.
- Erkennen von verschiedenen Medienzuständen von Temperatur und/oder Schallgeschwindigkeit (Milchschaumkonsistenz, ...)

Ein erfindungsgemäßer Getränkebereiter lässt sich Anspruch 1 entnehmen.

Ein Fluid ist erfindungsgemäß Milch oder auch bereits erwärmte Milch mit Milchschaumanteilen (ggfs. sogar reiner Milchschaum).

In der Regel ist die Fördereinrichtung (in einem Leitungssystem des Getränkebereiters) stromaufwärts des Durchflussmesssystems oder von Teilen desselben angeordnet. Es sind aber auch Anordnungen möglich, bei denen die Fördereinrichtung stromabwärts des Durchflussmesssystems bzw. von Teilen desselben positioniert ist. Der Begriff des Durchflussmesssystems wird sehr allgemein verstanden: Es kann sich um ein System mit einem Mengenmesser, mit einem Volumenzähler oder auch mit einem Durchflussmesser, der einen Volumendurchfluss erfasst, handeln. Erfindungsgemäß ist ein Ultraschall-Durchflussmesssystem (nachfolgend abgekürzt: US-DFMS) und/oder ein Magnet-Induktions-Durchflussmesssystem (nachfolgend abgekürzt: MI-DFMS) einsetzbar.

Bei der Fördereinrichtung handele es sich erfindungsgemäß insbesondere um eine Pumpe.

Der/die einen/den Durchfluss des Fluids kennzeichnende(n) Parameter kann/können insbesondere eine Geschwindigkeit des Fluids, ein Durchflussvolumen pro Zeiteinheit, eine durchfließende Masse pro Zeiteinheit, ... des Fluids in einer Fluidleitung im Getränkebereiter bzw. in einem Gehäuse desselben (oder auch in einer Ansaugleitung außerhalb des Gehäuses des Getränkebereiters) sein.

Insbesondere kann aber auch eine Temperatur (als Parameter, der einen momentanen Zustand des Fluids kennzeichnet) erfasst werden. Insbesondere dann, wenn das DFMS zusätzlich, vgl. nachfolgend, einen Temperatursensor aufweist. Dieser Fall umfasst erfindungsgemäß, dass das DFMS einen Durchflussmesser (DFM) und einen Temperatursensor räumlich getrennt voneinander, d.h. an unterschiedlichen Positionen, z.B. innerhalb eines Gehäuses des Getränkebereiters, aufweist. Dabei können ein solcher DFM und ein solcher Temperatursensor getrennt voneinander arbeiten, d.h. dass die entsprechenden Messwerte getrennt voneinander erfasst und ausgewertet werden können (z.B. in einer zentralen Steuereinheit).

Bei einem Parameter ("Zustandsparameter"), der den Zustand des Fluids kennzeichnet, handelt es sich erfindungsgemäß um eine Größe, die angibt, ob Luftbläschen in einer Flüssigkeit als Fluid enthalten sind oder nicht. Ebenso kann es sich um eine Größe handeln, die sowohl den Luft- als auch den Flüssigkeitsanteil in einem Fluid angibt.

Als ein, eine Eigenschaft des Fluids kennzeichnender Parameter ("Eigenschaftsparameter") kann mit dem DFMS beispielsweise auch eine Dichte oder eine Viskosität des Fluids erfasst werden.

Erfindungsgemäß kann für jeden Parameter eine Vielzahl einzelner Messwerte zeitlich aufeinanderfolgend vom DFMS erfasst werden (Parameter-Messwertreihe).

Wird beispielsweise mittels eines Ultraschall-DFM (US-DFM) des (US-)DFMS festgestellt, dass die in eine Brühkammer eines elektrisch betriebenen Kaffeevollautomaten (als Getränkebereiter) momentan oder pro Zeiteinheit einströmende Wassermenge zu hoch ist, so kann die Förderleistung der Fördereinrichtung so lange reduziert werden (Regelung), bis mittels des US-DFM festgestellt wird, dass die momentan oder pro Zeiteinheit einströmende Wassermenge einem vordefinierten Sollwert entspricht (bzw. es kann so geregelt werden, dass die Messwertreihe über die Zeit gesehen einer vorgegebenen Sollwertkurve folgt).

Ein solcher Sollwert (oder eine Sollwertkurve) kann beispielsweise auch in einem Speicher eines Mikrokontrollers oder eines Computersystems des Getränkebereiters als Sollwert-Fördermengenverlaufskurve, in der die jeweils momentan gewünschte Fördermenge variabel über den gesamten Brühzeitverlauf vordefiniert ist, hinterlegt werden. Der Getränkebereiter kann somit programmgestützt bzw. computergestützt arbeiten und demgemäß, z.B. in Form eines Mikrocontrollers, auch einen Mikroprozessor sowie einen Speicher, in dem Steuer- oder Regelungsprogramme (die dann von dem Mikroprozessor ausgeführt werden) ebenso wie besagte Sollwertkurven abgelegt sein können, aufweisen.

Es können auch im Leitungssystem des Getränkebereiters eventuell vorhandene Ventile der Fördereinrichtung geregelt werden.

Wie nachfolgend noch beschrieben, kann auch ein kombiniertes System aus einer Fördereinrichtung und einem Erhitzersystem realisiert sein, z.B. als Venturi-Dampfstrahlpumpensystem zur Milchansaugung. Dabei kann die Ansaugleistung bzw. die Dampfmenge-pro-Zeiteinheit (beispielsweise über ein Ventil in einer Dampfzuleitung) geregelt werden. Der Aufbau eines solchen Venturi-Dampfstrahlpumpensystems an sich ist dem Fachmann dabei bekannt.

Weitere vorteilhafterweise realisierbare Merkmale lassen sich Anspruch 2 entnehmen.

Ein dergestaltiges Ausbilden kann durch Einsatz eines Temperatursensors im Rahmen des DFMS, insbesondere eines Ultraschall-basierten Durchflussmessers, der einen solchen Temperatursensor integriert, erfolgen.

Weitere vorteilhafterweise realisierbare Merkmale lassen sich Anspruch 3 entnehmen.

Neben der Temperatur bzw. den Temperaturen können selbstverständlich auch andere der erfassten Parameter zum Steuern oder zum Regeln des Erhitzersystems verwendet werden.

Weitere vorteilhafterweise realisierbare Merkmale lassen sichdem abhängigen Anspruch 4 entnehmen.

Als Temperatursensor kann insbesondere ein NTC-Element oder auch ein PTC-Element verwendet werden.

Der grundlegende Aufbau eines magnetinduktiven DFM ist dem Fachmann z.B. aus der EP 1 756 531 A1 bekannt.

Weitere vorteilhafterweise realisierbare Merkmale lassen sich Anspruch 5 entnehmen.

Die erfassten, z.B. den/einen Durchfluss betreffenden Parameter werden in der Regel als Volumen, Masse, Menge, ... pro Zeiteinheit erfasst. Es kann eine Vielzahl von Messwerten über ein längeres Zeitintervall (beispielsweise über ein Intervall der Länge zwischen 1 min und 10 min) und/oder in bevorzugt konstanten Zeitabständen (von beispielsweise im Bereich zwischen 1 s und 5 s) über die gesamte Anschaltzeit bzw. Betriebsdauer des Getränkebereiters erfasst werden (laufende Messwerterfassung).

Weitere vorteilhafterweise realisierbare Merkmale lassen sich Anspruch 6 entnehmen.

Weitere vorteilhafterweise realisierbare Merkmale lassen sich Anspruch 7 entnehmen.

Ein erfindungsgemäßes Verfahren ist in Anspruch 8 beschrieben.

Die Erfindung realisiert also unter anderem folgendes:
Eine Volumendosierung in einem Getränkebereiter von Milch, welche auf Basis eines Durchflussmesssystems (nachfolgend abgekürzt: DFMS) umfassend einen Durchflussmesser bzw. ein Flow-Meter (nachfolgend abgekürzt: DFMS) arbeitet.
Eine Steuerung, bevorzugt: eine Regelstrecke, die auf Basis der Signale des DFMS bzw. dessen DFM die Leistung einer Fördereinrichtung (insbesondere: Pumpe) des Getränkebereiters beeinflusst (neben den Flow-Signalen, also den Durchfluss-Messsignalen für das Fluid bzw. Medium Milch) werden bevorzugt auch Temperaturen in der Steuer- bzw. Regelstrecke berücksichtigt.
Die Verwendung eines DFMS bzw. DFM in einem Getränkebereiter, welches/r ultraschallbasiert arbeitet und damit den Durchfluss bzw. Flow in einer Messstrecke ohne bewegte Teile und weitestmöglich oder vollständig berührungslos (in Bezug auf das fließende und zu vermessende Medium) erfassen kann. Das Medium muss nicht nur (kalte) Milch sein, sondern kann auch die erwärmte, evtl. geschäumte Milch sein.
Die sehr schnelle Erfassung der Temperatur und/oder der Dichte des Mediums mittels der sich abhängig von Temperatur oder Masse verändernden Schallgeschwindigkeit im Medium (bei der Masse ist insbesondere die Milchschaumkonsistenz angesprochen).

In einer erfindungsgemäßen Variante verwendet die Erfindung als DFM des DFMS einen Ultraschall-Durchflussmesser (abgekürzt: US-DFM), nachfolgend alternativ auch als Ultraschall-Sensor bzw. US-Sensor bezeichnet.

In der Regel misst dieser US-DFM die Geschwindigkeit eines strömenden Mediums (hier: Milch, Milchschaum, ...) mit Hilfe akustischer Wellen (basierend auf der Schallgeschwindigkeit des Mediums). Er kann zwei Teile umfassen: den eigentlichen Messaufnehmer (Ultraschallsensor) sowie einen Auswerte- und Speiseteil (Transmitter oder Messumformer). Wobei meist das Sende- und Empfängerelement dasselbe Bauteil ist und jeweils im Wechsel von einer elektronischen Auswerte- und Steuereinheit als Sender oder Empfänger angesteuert bzw. ausgewertet wird. Die erfindungsgemäß vorteilhafterweise eingesetzte akustische Durchflussmessung bietet einige Vorzüge gegenüber anderen Messverfahren: Die Messung ist weitgehend unabhängig von den Eigenschaften der verwendeten Medien wie elektrische Leitfähigkeit und Viskosität. Das Fehlen bewegter mechanischer Teile verringert den Wartungsaufwand. Der Messaufbau lässt sich in die üblichen Querschnitte eines Getränkebereiters gut integrieren, ein Druckverlust durch Querschnittsverengung an der Messstelle entsteht nur vernachlässigbar. Ein großer Messbereich zählt zu den weiteren positiven Eigenschaften dieser Vorgehensweise. Es kann erfindungsgemäß insbesondere das Ultraschall-LaufzeitVerfahren eingesetzt werden (siehe nachfolgend).

Die US-Durchflussmess-Sensorik bietet also die Möglichkeit z.B. den Milchfluss ohne bewegte Teile zu messen. Entscheidend ist hierbei die Idee, dieses Messprinzip in der Anwendung in einem Getränkebereiter, insbesondere in Kaffeemaschinen, einzusetzen. Darauf aufbauend wird erfindungsgemäß eine Steuerung, insbesondere eine Regelstrecke, aufgebaut, bei der das Fördermittel (Fluid) durch die Signale des Messaufnehmers beeinflusst wird. Ergänzend kann aber auch z.B. die Energie eines Erhitzersystems (nachfolgend alternativ auch als Heizeinrichtung bezeichnet) durch die Signale des Messaufnehmers beeinflusst werden.

Es kann also eine Wechselwirkung stattfinden, bei der das Fördermittel bevorzugt durch die gewünschte Fließgeschwindigkeit des Mediums geregelt wird, wobei als Messaufnehmer bevorzugt eine schnelle US-DFM Messung zum Einsatz kommt und/oder bevorzugt auf Basis des Volumenstroms und der bekannten Vorlauftemperatur und/oder der gemessenen Ausgabetemperatur die Energiezufuhr in das Erhitzersystem geregelt wird.

Als Erhitzersystem können klassische Durchlauferhitzersysteme Verwendung finden oder auch sehr massearme Dickschicht- oder gar Blankdrahtheizsysteme. Diese sind beispielsweise aus der WO 2010/133409 A1 bekannt. Alternativ kann das Medium mittels kondensierendem Wasserdampf erhitzt werden. Für eine gewünschte Ausgabetemperatur kann die Heizleistung (elektrische Energie oder Dampfenergie) dem Volumenstrom angepasst werden oder der Volumenstrom kann aufgrund der bekannten Heizleistung mittels gemessener Flow-Werte geregelt werden.

Analog kann natürlich auch abhängig der gemessenen Temperatur und des Medienstroms Kälteenergie für die Zubereitung von Kaltgetränken zugeführt werden.

Erfindungsgemäß besonders vorteilhaft ist, dass mit schnellen elektronischen Auswertungen neben der Laufzeit- oder Dopplermessung der Fließgeschwindigkeit auch (z.B. über die Transit-Time) die Schallgeschwindigkeit des Mediums gemessen werden kann.

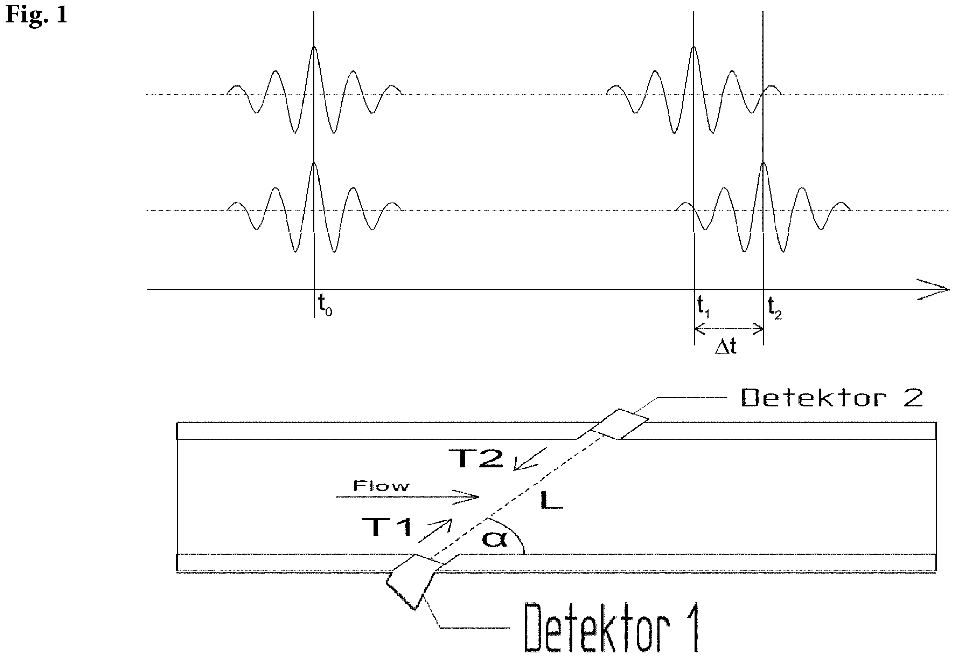

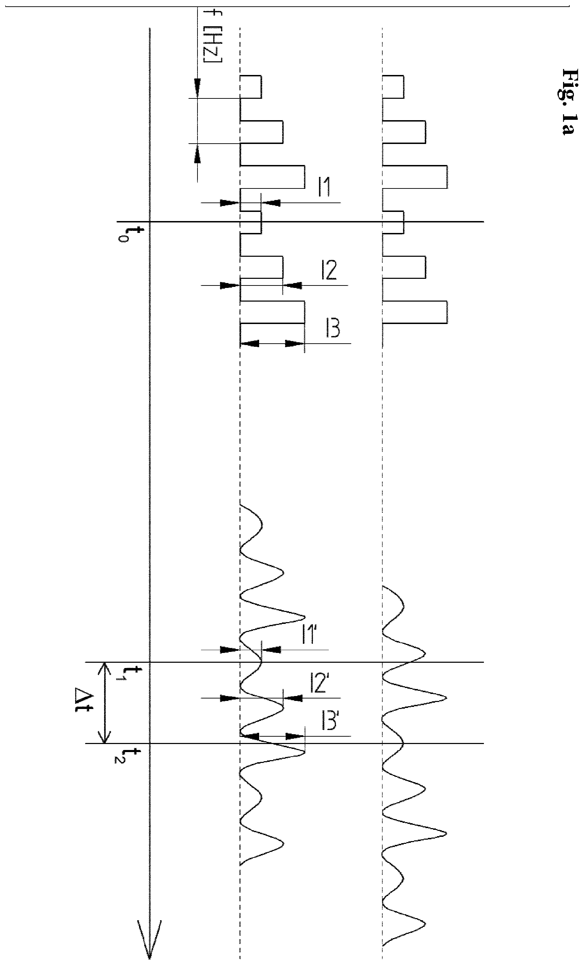

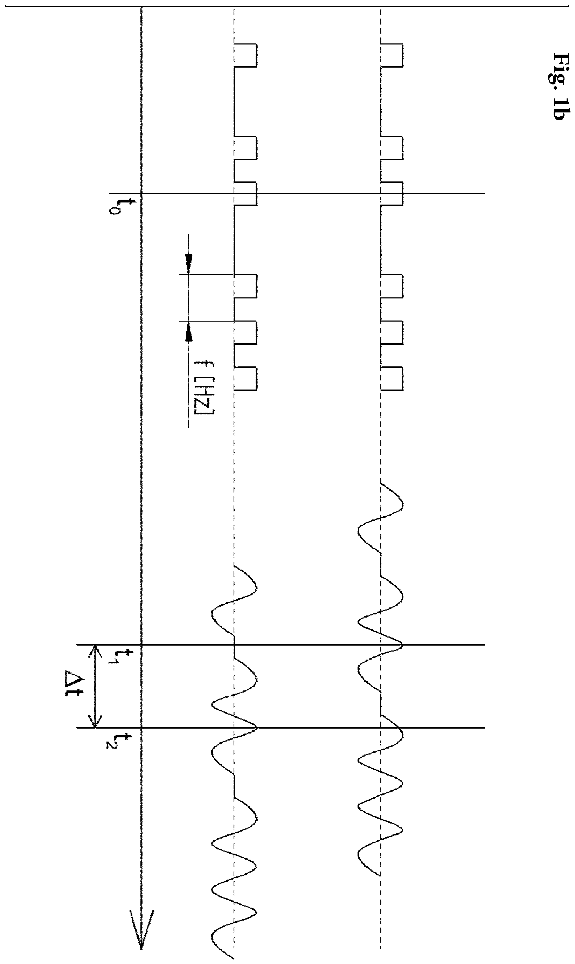

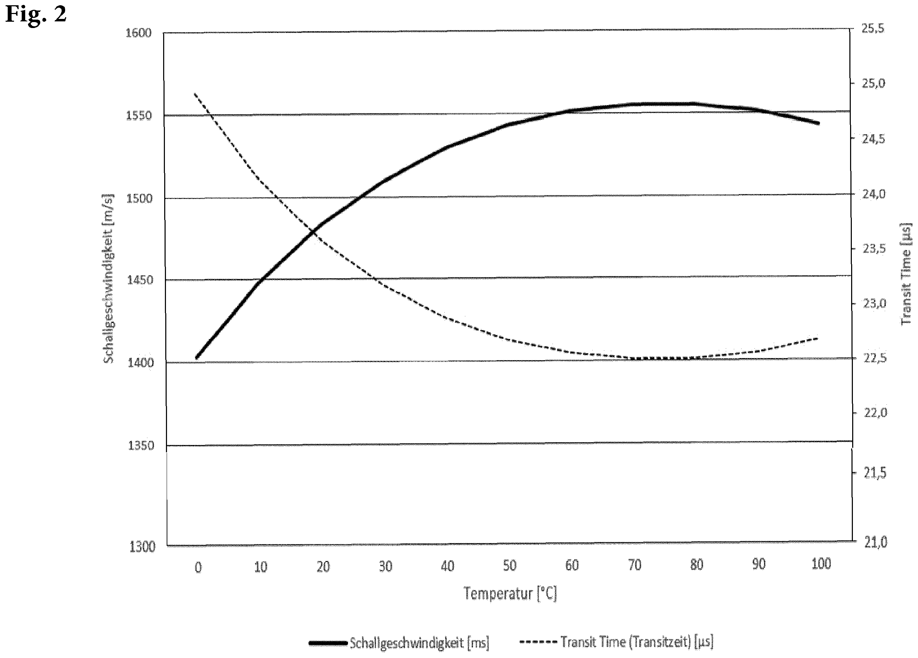

Die Schallgeschwindigkeit im bekannten Medium ist abhängig von der Temperatur. Daraus kann nun in einem beschränkten Bereich (siehe nachfolgendes Beispiel von Wasser) sehr schnell die Mediumtemperatur über die Laufzeitmessung ermittelt werden. Die Zeit eines ausgesendeten Sendeimpulses bis zu einem Empfang dieses Impulses wird dabei gemessen. Dies ist grundsätzlich bekannt, vgl. dazu Figuren 1 (temperaturabhängige Laufzeiten) und 2 (Abhängigkeit der Schallgeschwindigkeit von der Temperatur). Aus Figur 2 ist erkennbar, dass dies nur in bestimmten Bereichen sinnvoll ist.

Eine Schwierigkeit liegt nun noch darin, dass die ausgesendeten Schallwellen meist in einer vorgegebenen Frequenz durch den Piezo-Schallwellenwandler ausgesendet werden oder vom Microcontroller des Ultraschallgebers vorgegeben sind. Das Delta des Empfangsignals bei Temperaturänderung von z.B. 10°C auf 30°C ist ein mehrfaches größer als ein Sendeimpulslänge. (Siehe Fig. 1.) Einem einzelnen Empfangssignal kann daher nicht der genaue Sendeimpuls zugeordnet werden.

Damit ist eine Rückführung der genauen Temperatur nur möglich, wenn die genaue Starttemperatur durch eine zusätzliche Hilfe bekannt ist und diesem Signal dann von dem bekannten Startwert gefolgt wird oder den Sendesignalen ein Muster aufmodelliert wird. Beide Möglichkeiten können erfindungsgemäß umgesetzt werden, vgl. nachfolgend.

Als einfachste Art der Messung der Starttemperatur kann erfindungsgemäß das US-Sensorelement zusätzlich mit einem Temperatursensor (z.B. NTC Fühler) ausgestattet werden. Dieser Temperatursensor kann im Medium, in einer bevorzugten Ausführungsform aber auch außerhalb des Mediums, aber sehr nahe am Medium, z.B. an einer dünnen Rohrwand, platziert sein. Die Temperatur am Temperatursensorelement bestimmt damit den Startwert der Mediumtemperatur. Eine sich ändernde Temperatur im Medium kann damit sehr schnell (unabhängig von der Totzeit des zusätzlichen Temperatursensorelements) in wenigen Millisekunden ermittelt werden. Dabei wird lediglich einem markanten Punkt des Empfangssignals (Höchstwert / Nulldurchgang) gefolgt und dessen Laufzeitveränderung gegenüber den Sendesignalen ausgewertet. Erfindungsgemäß kann neben einer schnellen Temperaturerfassung mit NTC/PTC-Elementen mit letzteren auch eine Berechnung der Temperatur über mindestens zwei bis drei (oder auch mehr) der gemessenen Punkte erfolgen. Damit kann der Endpunkt bis zur Beharrung errechnet werden, der dann die aktuell tatsächliche Temperatur des Mediums bei Durchströmung der Messstelle wiedergibt. Die Ansprechzeit des Temperaturssensors über Masseanhäufungen wird damit verkürzt. Basis hierfür ist die Tatsache, dass durch Verzögerungen in der Ansprechzeit eines Sensors in seiner Anwendung, sich die gemessene Temperatur asymptotisch dem tatsächlichen Endwert annähert.

Mittels dem zusätzlichen Temperatursensorelement kann die Schallgeschwindigkeit ermittelt und der Temperatursensor kann auf das Medium kalibriert werden. Zusätzlich kann bei labortechnisch ermittelten und damit bekannten Schallgeschwindigkeiten von verschiedenen Medien auch auf die Art des durchströmenden Mediums unter Berücksichtigung der Temperatur geschlossen werden. Beispielsweise kann die Schallgeschwindigkeit in Abhängigkeit der Temperatur durch den Fettanteil in der Milch variieren. Es kann also bei bekannter Temperatur auf den Fettgehalt oder andere Parameter (Sojamilch, ..) geschlossen werden.

Als weitere Art zur Ermittlung des oben als problematisch beschriebenen Startwerts bzw. dem Erkennen, welches Empfangssignal welchem Sendesignal zuzuordnen ist, kann dem Sendesignal erfindungsgemäß ein zusätzliches Signal aufmodelliert (bzw. aufmoduliert) werden, so dass in den empfangenen Signalen ein Muster erkennbar ist und die einzelnen Sinuswellen einem Sendesignal (z.B. einer Sende-Flanke desselben) zugeordnet werden können. Dies kann beispielhaft in Form von variierenden Signalstärken erfolgen. Als weiteres Beispiel wäre die Veränderung der Pausenzeiten oder Aussetzmuster innerhalb der vorgegebenen Frequenz f.

Beide zuvor beschriebenen erfindungsgemäße Methoden sind in Verbindung mit einem Getränkebereiter besonders vorteilhaft einsetzbar.

Mit einem erfindungsgemäßen US-DFM bzw. Sensorelement ohne Toträume und ohne bewegte Teile im Fluidpfad (also: Milchpfad), lässt sich die Fördereinrichtung steuern oder regeln bzw. die Parameter der Fördereinrichtung (z.B. Dampfdruck bei Venturi-Systemen oder elektrische Leistung bzw. Drehzahl bei Pumpensystemen) beeinflussen. Im einfachsten Fall geschieht dies steuernd, d.h. der Getränkebereiter bzw. (zumindest) die Fördereinrichtung desselben wird überwacht und die Parameter können für Folgedosierungen geeignet angepasst werden. In einer erfindungsgemäßen Ausführungsform wird auf die Messsignale des US-DFM bzw. des Sensorelements hin die Fördereinrichtung geregelt.

Es versteht sich also von selbst, dass mit einer solchen Rückführung (also Regelung) der Flowimpulse bzw. Messwerte auf die Fördereinrichtung nicht nur Milch, sondern auch andere Medien (z.B. Wasser) mit den entsprechenden Hilfsmitteln (drehzahlregelbare Wasserpumpe, ..) dosiert werden können und neben der exakten Einstellung der Fließgeschwindigkeit auch Flussprofile (insbesondere: über definierte Zeitintervalle) abgebildet werden können. Beispielsweise können für eine besonders gute Kaffeeextraktion Flussprofile (oder auch Druckprofile) gefahren werden.

Störungen im Fluid, z.B. durch Luftblasen oder andere (z.B. CO₂) Ausgasungen können detektiert werden. Dies beruht auf der sich ändernden Schallgeschwindigkeit im Medium. Diese ändert sich bei einer Vermischung eines Fluids mit Gasen. Damit lässt sich zusätzlich auf einen Gas/Luft Anteil in einem Fluid schließen (Beispiel Milchschaum) oder bei sehr großen Gasanhäufungen auf einen leeren Bevorratungsbehälter schließen. Die Steuerung/Regelung reagiert auf diese Signale in Form von Leermeldungsevents oder der Beeinflussung der Luftzuführung für eine gezielte Milchschaumkonsistenz.

Für eine hygienische Milchbevorratung werden zunehmend "BagInBox"-Behälter interessant, in denen die Milch aseptisch abgefüllt ist. Bei Dosierungen des Mediums entleeren sich die Behälter. Ist der Behälter leer, so wird dort nicht (wie in offenen Milchsystemen) Luft angesaugt. Das Fördermittel kann einfach kein Medium mehr fördern. Dieser Effekt kann mit dem oben beschriebenen Sensorelement als Leersignal ausgenutzt werden, wenn kein Flow mehr stattfindet. (Im Stand der Technik werden hier z.B. kapazitive Sensoren eingesetzt, die Luft in einem Milchschlauch detektieren können, diese funktionieren aber bei BagInBox Systemen nicht zuverlässig.)

Als weiteres Messverfahren (neben bzw. anstelle von Ultraschall) wird in einer weiteren erfindungsgemäßen Variante magnet-induziert, also mit einem MI-DFM, gearbeitet: Durchströmende Massen (in einem Magnetfeld) induzieren Strom an zwei Elektroden. Damit sind neben der reinen Strömungsmessung auch Luftblasen im System schnell erkennbar. Mit den vorangehend beschriebenen Messverfahren lassen sich auch starre Messstrecken realisieren.

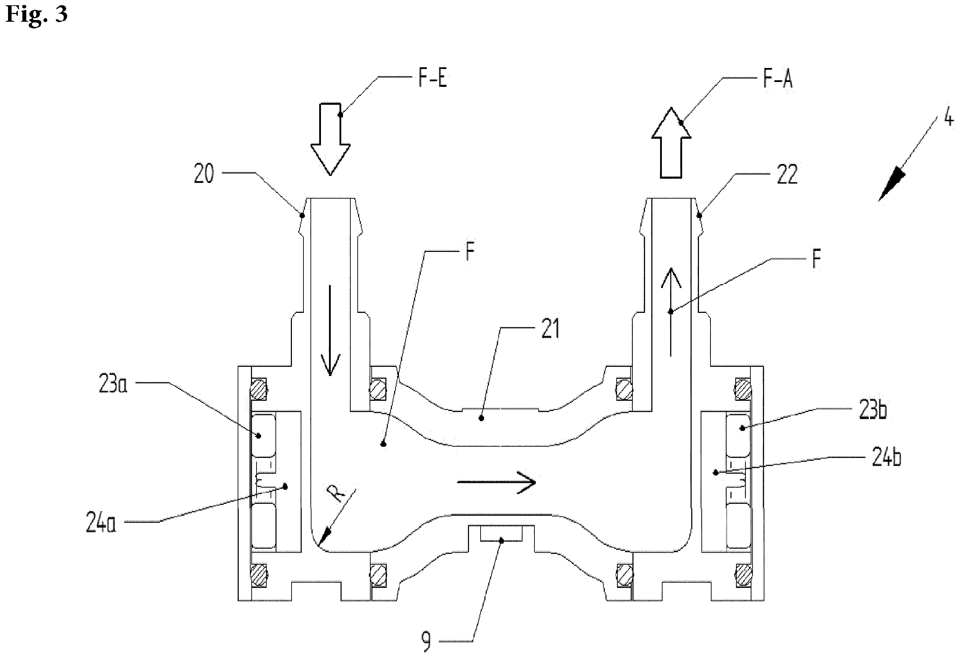

Der erfindungsgemäße Getränkebereiter kann einen Strömungskanal (durch den das Fluid durchströmt, an dem also die Parameter erfasst werden) aufweisen, dessen Querschnitt bekannt ist. Vorteilhaft ist dabei das Ausgestalten des Getränkebereiters so, dass das Erfassen am (und nicht: im) Kanal erfolgt, dass also keine bewegten Teile für die Flussmessung/Volumenmessung ins Medium eingebracht werden. Der Abstand der schallgebenden Sender- und Empfängerbauteile des DFM bzw. DFMS im Strömungskanal sind dabei vorteilhafterweise bekannt. Die Zu- und Ablaufkanäle zu diesem Strömungskanal können vorteilhafterweise mit ausrechend Radien versehen werden (siehe Fig. 3/R), damit ist eine einfache Reinigung automatisierte Reinigung möglich.

Zur Ermittlung der Fließgeschwindigkeit und der Temperatur werden vorzugsweise Ultraschallfrequenzen eingesetzt. Zur Ermittlung der Fließgeschwindigkeit können aber auch magnet-induzierte Messverfahren eingesetzt werden (MI-DFM).

Der für die Messung verwendete Strömungskanal im/am Getränkebereiter wird vorzugsweise lediglich in eine Richtung durchströmt, wobei vorzugsweise Einlass und Auslass (annähernd) symmetrisch bzw. ähnlich aufgebaut sein können. Dieser Strömungskanal ist vorzugsweise mit Schlauchverbindern ausgestattet, um flexibel in einem Getränkebereiter eingesetzt werden zu können. Dieser Strömungskanal und seine benachbarten medienberührenden Teile können aus einem nicht korrosiven, lebensmittelgeeigneten Material gestaltet sein, vorzugsweise aus Kunststoff.

Das DFMS bzw. der DFM desselben oder zumindest Teile davon befindet/befinden sich vorzugsweise zwischen Vorratsbehälter (Milch- oder Wassertank) oder Festwasseranschluss (Zulauf) des Getränkebereiters und der Ausgabestelle in Richtung Tasse (Ablauf).

Der Aufbau des DFM bzw. Sensorelements kann genau zwei (oder auch mehr als zwei) hydraulische Anschlüsse aufweisen und/oder mindestens einen elektrischen Anschluss zur Stromversorgung und zur Ausgabe von Messsignalen bzw. Messdaten (Temperatur, Fließgeschwindigkeit, ...). An der Sensorik (DFM bzw. DFMS) kann sich eine Steuerung befinden, welche die erfassten Signale (z.B. Strömungssignale) in digitale Signale wandelt. Jedes digitale Signal kann für eine definierte Menge des/eines Fluids stehen.

In ein und demselben Getränkebereiter können auch mehrere Fördereinrichtungen zum Fördern eines Fluids vorgesehen sein, zu denen jeweils ein Durchflussmesssystem zum Erfassen eines oder mehrerer einen Durchfluss dieses Fluids, eine Eigenschaft dieses Fluids und/oder einen Zustand dieses Fluids kennzeichnenden/r Parameter(s) gehört. Jede solche Fördereinrichtung (z.B. eine Wasserpumpe für der Brühgruppe zuzuleitendes Wasser und eine Milchpumpe) kann unter Verwendung eines der oder mehrerer der erfassten Parameter regelbar sein.

Ein erfindungsgemäßer Getränkebereiter kann insbesondere eine zentrale Steuereinheit (mit Mikrocontroller und Programmspeicher für die Erfindung umsetzende Steuer- bzw. Regelprogramme) aufweisen. Eine Kombination von mehreren Sensoren (vgl. unmittelbar vorangehender Absatz) mit dieser zentralen Steuerung ist möglich.

Besondere Vorteile der Erfindung sind insbesondere:
- Vorhandensein eines geschlossenen Regelkreises mit Fördereinrichtung und DFMS/DFM bzw. Messaufnehmer.
- Keine bewegten Teile im Fluid bzw. im Medium.
- Totraumfreie hygienegerechte Gestaltung des Messraums möglich.

Nachfolgend wird die Erfindung anhand mehrerer Ausführungsbeispiele beschrieben. Dabei zeigen:
Figuren 1, 1a und 1b die Temperaturabhängigkeit von Laufzeiten bei Ultraschallmessungen sowie das Laufzeitmessungsprinzip. Es ist auch eine Möglichkeit gezeigt, wie beispielsweise das Signal in Form seiner Intensität moduliert werden kann (I1-I3 mit den Empfangssignalen I1' bis I3'). "Detektor" bezeichnet jeweils einen US-Transciever (s. nachfolgend), der Pfeil im unteren Figurenteil die Fluidflussrichtung.
Figur 2 die Abhängigkeit der Schallgeschwindigkeit von der Temperatur am Beispiel von Wasser. Sowie die Durchlaufzeit (Transit Time) einer Schallwelle bei einer Ausführungsart des Messaufbaus von 35mm Länge.
Figur 3 einen erfindungsgemäßen US-DFM eines US-DFMS mit integriertem Temperatursensor.
Figur 4 einen ersten erfindungsgemäßen Getränkebereiter in Form eines Kaffeevollautomaten (gezeigt sind lediglich die erfindungswesentlichen Bauelemente).
Figur 5 einen zweiten erfindungsgemäßen Kaffeevollautomaten (ebenfalls mit den erfindungswesentlichen Bauelementen).
Figur 6 ein Strukturdiagramm mit Beispielvarianten, in denen die vorliegende Erfindung realisiert werden kann.

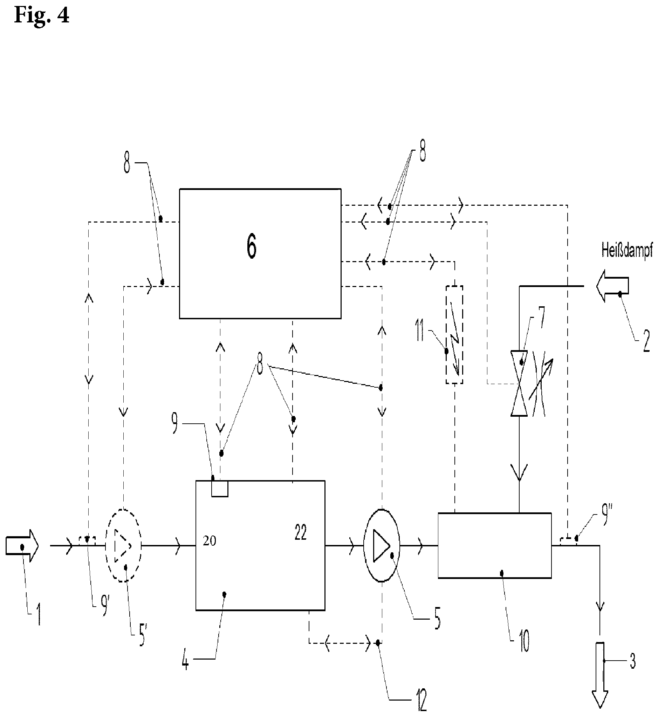

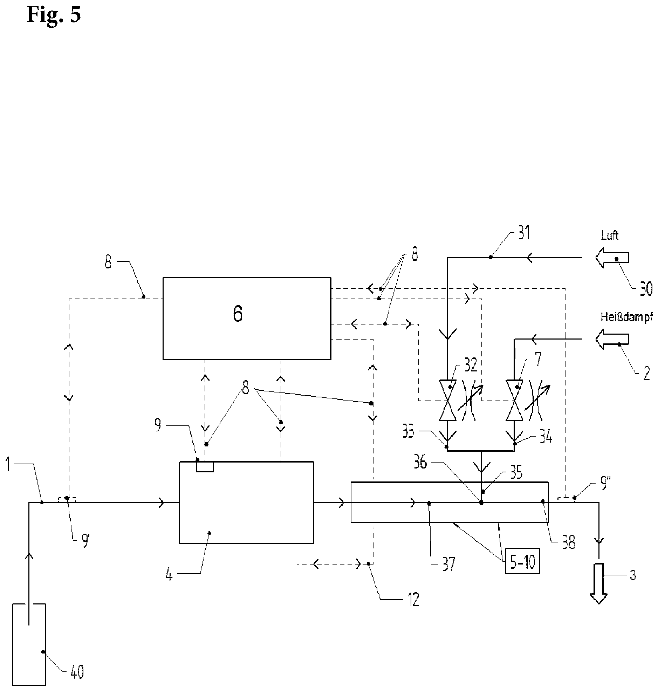

Figur 3 zeigt ein erfindungsgemäßes US-DFMS 4 mit einem erfindungsgemäßen US-DFM (vgl. auch Figuren 4 und 5), das/der Ultraschall-basiert arbeitet. Der US-DFM des US-DFMS 4 weist einen U-förmigen Rohrabschnitt auf, der die Elemente 20 bis 22 umfasst. 20 ist ein Verbindungsstück (Einlass-Verbinder), über das das (insbesondere hinsichtlich seines Durchflusses) zu vermessende Fluid F dem US-DFM zugeführt wird. F-E bezeichnet somit das in den US-DFM des US-DFMS 4 eingeleitete Fluid F. Dem Einlass-Verbinder 20 schließt sich fluidstromabwärts (in Bezug auf die Fluidflussrichtung gesehen um 90° abknickend) ein Mittelstück 21 an. Fluidstromabwärts des Mittelstücks 21 (und wiederum in Bezug auf die Fluidflussrichtung in diesem gesehen um 90° abknickend, so dass sich insgesamt ein U-förmiger Rohrleitungsverlauf ergibt) schließt sich der Auslass-Verbinder 22 an, über den das Fluid F den US-DFM bzw. das US-DFMS 4 verlässt. R symbolisiert die Verrundung von Kanten und das Fehlen von Toträumen im fluidbestromten Bereich des US-DFM.

Fluidstromabwärts des Auslass-Verbinders 22 folgt das Fördermittel bzw. die Fördereinrichtung 5, das/die auf Basis der Messsignale des gezeigten US-DFMS 4 regelbar ist (vgl. Fig. 4 und 5). Das aus dem US-DFMS 4 austretende (vermessene, d.h. ein/mehrere den Durchfluss (zu dessen Richtung vgl. die Pfeile in der Rohrleitung) des Fluids F durch den US-DFM kennzeichnende(r) Parameter wurde(n) erfasst) Fluid ist mit dem Bezugszeichen F-A versehen.

Der Einlass-Verbinder 20 integriert einen Ultraschall-Sender-Empfänger (Transciever) 23a, 24a, wobei 23a den Druckring und 24a die Piezokeramik dieses Transcievers (dessen grundsätzlicher Aufbau dem Fachmann bekannt ist) darstellt. Der Druckring sorgt hier für eine gleichmäßige Anlage des Piezo-Elements an der Gehäusewandung, der Fachmann könnte das Piezo-Element aber auch z.B. mit einer Vergussmasse an die Wandung gleichmäßig befestigen. Ebenso integriert der Auslass-Verbinder 22 einen Ultraschall-Sender-Empfänger (Transciever) 23b, 24b gleicher Bauart, so dass 23b den Druckring und 24b die Piezokeramik dieses Transcievers darstellt. Agiert 23a, 24a als Sender und 23b, 24b als Empfänger, so wird der Fluidfluss F zwischen den beiden Transcievern in Fluidflussrichtung vermessen, agiert 23b, 24b als Sender und 23a, 24a als Empfänger, so wird der Fluidfluss F zwischen den beiden Transcievern entgegen der Fluidflussrichtung vermessen. Die Umschaltung der Messrichtungen erfolgt mittels der zentralen Steuereinheit 6 (vgl. Figuren 4 und 5). kann der Sensor 23b, 24b als Sender und der Sensor 23a, 24a als Empfänger geschaltet werden: In diesem Fall wird entgegen der Fluidflussrichtung gemessen. Ein Teil der Steuereinheit kann sich auch in unmittelbarer Nähe des Piezo-Elements befinden und damit losgelöst von der zentralen Steuereinheit vor Ort in unmittelbarer Nähe der Piezo-Schallwandler bzw. dem Temperatursensor 9 befinden. Der Steuereinheit 6 werden dann bereits aufgearbeitete Daten von dem Sensorelement bereitgestellt.

Erfindungsgemäß weist das gezeigte Ultraschall-Durchflussmesssystem 4 neben dem beschriebenen US-DFM 20 bis 24b einen Temperatursensor 9 auf. Dieser Sensor 9 ist im Mittelstück 21 integriert und sitzt an der Rohraußenseite bzw. außen an der Rohrwandung dieses Mittelstücks 21. Mit diesem Sensor 9 können die bereits beschriebenen Temperaturmessungen durchgeführt werden.

Figur 4 zeigt in einem ersten Ausführungsbeispiel eines erfindungsgemäßen Kaffeevollautomaten den Einsatz des in Figur 3 gezeigten US-DFMS 4.

1 bezeichnet den Eingang des zu vermessenden Mediums. Hierbei handelt es sich in einer ersten nicht-erfindungsgemäßen Variante dieses Beispiels um Wasser (Brühwasser bzw. der Brühgruppe - hier nicht gezeigt - zuzuführendes Wasser), in einer zweiten erfindungsgemäßen Variante dieses Beispiels um Milch.

(Die Figur zeigt beide Varianten anhand einer Schemazeichnung, nachfolgend werden die bei den beiden Varianten bestehenden geringfügigen Unterschiede dem Fachmann jeweils anhand der Details klar. Beide Varianten können zusammen in ein und demselben Getränkebereiter verwirklicht sein, wobei dann zumindest die Elemente 1, 4, 9, 5, 10 doppelt, nämlich einmal zur Wasserflussvermessung und -regelung und einmal zur Milchflussvermessung und - regelung, vorhanden sein können. Ein und dieselbe, also gemeinsame zentrale Steuereinheit 6 regelt dabei den Wasserfluss und den Milchfluss unabhängig voneinander. Insbesondere können also bei diesem Ausführungsbeispiel zwei US-DFMS bzw. US-DFMS vorhanden sein, die es im Kaffeevollautomaten erlauben, sowohl Parameter für die Regelung des Wasserflusses als auch für die Regelung des Milchflusses zu erfassen und auszuwerten. Die (einzige) zentrale Steuereinheit 6 weist dann die notwendige Anzahl elektrischer Verbindungen 8 auf, die mit diesen US-DFM bzw. US-DFMS bzw. Teilen derselben verbunden sind.)

Bei der ersten Variante kann der Eingang 1 des Wassers von einem Festwasseranschluss oder von einem Tank (Wassertank) erfolgen. Bei der zweiten Variante kann Milch aus einem Milchbehälter oder aus einer "Bag-in-Box" eingeleitet 1 werden. Stromabwärts des Eingangs 1 ist das jeweilige US-DFMS 4, das jeweils einen Temperatursensor 9 integriert, angeordnet (vgl. auch Einlass 20 und Auslass 22). Stromabwärts der Systeme 4 folgt jeweils das mittels der erfassten Parameter regelbare Fördermittel (Fördereinrichtung 5), hier als Wasserpumpe bzw. als Milchpumpe ausgebildet (z.B. Zahnradpumpe, Schwingankerpumpe oder Flügelzellenpumpe). Die Regelung der Pumpe kann jeweils auf zwei Arten erfolgen: Einmal (erster Regelmodus) als direkte Regelung 12 der Pumpe 5 ausgehend vom (jeweiligen) US-DFMS 4 selbst, wobei die Einheit 6 jeweils nur den Durchfluss bzw. Flow (von Wasser und/oder von Milch) vorgibt und das jeweilige Fördermittel 5 samt seines Systems 4 selbstständig den Durchfluss regeln. Oder (vgl. elektrische Verbindung 8 zwischen zentraler Steuereinheit 6 und dem jeweiligen Fördermittel 5) es kann ein zweiter Regelmodus betrieben werden, bei dem die zentrale Steuereinheit 6 alle vorgenannten Aufgaben übernimmt (indirekte Regelung): Die mittels des jeweiligen US-DFMS 4 (inklusive vom jeweiligen Sensor 9) erfassten Parametermesswerte (z.B. Messreihen über die Zeit für momentane Durchflussvolumina pro Zeiteinheit und Temperaturen des Wassers bzw. der Milch) werden über Daten- und Steuerleitungen 8 zwischen dem US-DFM des US-DFMS 4 bzw. dem Sensor 9 desselben einerseits und der Einheit 6 andererseits (s. nachfolgend) an die Einheit 6 übermittelt und in letzterer ausgewertet. Die Auswertungsergebnisse werden, wiederum über besagte Leitung(en) 8 an die (jeweilige) Einrichtung 5 zur Regelung derselben übermittelt.

Stromabwärts des Fördermittels 5 (wird von stromaufwärts bzw. stromabwärts gesprochen, so ist immer der Fluidfluss gemeint) ist jeweils ein regelbares Erhitzersystem 10 (Heizeinrichtung) positioniert, so dass das Fördermittel 5 verlassende(s) Wasser bzw. Milch jeweils in die zugehörige Heizeinrichtung 10 fließt. Bei der ersten Variante (Wasser) kann 10 ein Boiler sein (das Ventil 7 und der Eingang 2, vgl. nachfolgend, entfallen dann) und der elektrische Stromzufluss 11 bzw. die Heizleistung von 10 kann anhand der mit dem US-DFMS 4, 9 der Wasserflussregelung erfassten Parameter bzw. der Messwerte derselben geregelt werden. Bei der zweiten Variante (Milch) kann 10 ein Durchflusserhitzer bzw. Wärmetauscher sein, dem aus einem nicht gezeigten Dampferzeuger über den Eingang 2 und das mittels der Messergebnisse von 4, 9 regelbare Ventil eine variable Heißdampfmenge zugeführt wird, wodurch die Milch in 10 entsprechend erwärmt wird. Bei der zweiten Variante kann also der elektrische Stromzufluss 11 entfallen. Bei jeder Variante kann also (neben der jeweiligen Einrichtung 5) auch das jeweilige Erhitzersystem 10 bzw. die Heizleistung desselben anhand der mit dem jeweiligen US-DFMS 4, 9 (für die Wasserflussregelung bzw. die Milchflussregelung) erfassten Parametern bzw. der Messwerte derselben geregelt werden.

Das Bezugszeichen 11 symbolisiert also die elektrische Heizenergiezuführung zur Heizeinrichtung 10 bzw. die Regelung der Heizeinrichtung 10 anhand der variablen elektrischen Heizenergiezuführung 11 (vermittels der Steuereinheit 6 über die Leitung 8 zur Heizenergiezuführung 11) auf Basis von mittels des DFMS 4 erfassten Parametern.

Das die jeweilige Heizeinrichtung verlassende, aufgeheizte Fluid (Wasser bzw. Milch) fließt stromausgangsseitig von 10 in die Getränkeausgabe 3 (das Wasser durchfließt dabei die zwischen dem Erhitzersystem 10 und der Ausgabe 3 angeordnete Brühgruppe - hier nicht gezeigt).

Es kann sich beim Ventil 7 um ein Proportionalventil, ein magnetisch angesteuertes Ventil oder auch ein motorisch angesteuertes Ventil handeln.

Die Bezugszeichen 8 bezeichnen bidirektionale Daten- und Steuerleitungen zwischen der zentralen Steuereinheit 6 bzw. der CPU derselben einerseits und den bereits beschriebenen Komponenten (in beiden Flussregelvarianten) andererseits: US-DFM bzw. Durchflussmessteil der US-DFMS 4, Temperatursen-soren 9 in den Systemen 4, Fördermittel 5, Ventil 7 bzw. elektrische Heizenergiezuführung 11 (letztere zum System 10). Zusätzlich sind zwischen der Einheit 6 einerseits und den optionalen Einheiten 5', 9' und 9" ebenfalls solche bidirektionale Daten- und Steuerleitungen vorgesehen. Über sämtliche Leitungen 8 können somit erfasste Messsignale oder auch Statusmeldungen von den Elementen 9', 5', 9, 4, 5, 11, 7, 10, und 9" an die Einheit 6 übertragen werden und die Einheit 6 kann diese Elemente 9', 5', 9, 4, 5, 11, 7, 10, und 9" steuern oder regeln.

Das Bezugszeichen 5' zeigt, dass anstelle der oder zusätzlich zur Fördereinrichtung 5 eine (weitere) Fördereinrichtung 5' auch stromaufwärts des jeweiligen Systems 4 positioniert werden kann. 9' symbolisiert einen (ggf. zusätzlichen) optionalen Temperatursensor 9', der eine Fluidtemperatur stromaufwärts des jeweiligen Systems 4 (und, sofern vorhanden, stromaufwärts der optionalen Fördereinrichtung 5') erfasst. 9" zeigt einen optionalen (ggf. zusätzlichen) Temperatursensor stromabwärts der jeweiligen Fördereinrichtung 5 sowie stromabwärts der jeweiligen Heizeinrichtung 10. Mit 9" lässt sich die Temperatur des die Einrichtung 10 verlassenden Fluids (z.B. also des erhitzten Brühwassers, falls der Sensor 9" stromaufwärts der Brühkammer positioniert ist, oder des bereits aufgebrühten Kaffees, falls der Sensor 9" stromabwärts der Brühkammer positioniert ist) erfassen.

Figur 5 zeigt als zweites Ausführungsbeispiel einen weiteren erfindungsgemäßen Kaffeevollautomaten. Zu diesem werden lediglich die Regelung der Milchförderung bzw. des Milchflusses (also nicht die Regelung der Brühwasserförderung bzw. des Wasserflusses - diese erfolgt wie in Fig. 4) bzw. beim Milchdurchflussmesssystem und bei der Milchfördereinrichtung beschrieben. Grundsätzlich ist die Funktionsweise wie beim Ausführungsbeispiel von Figur 4, sodass dass nachfolgend nur die Unterschiede beschrieben werden. Einige der in Figur 4 gezeigten Merkmale sind jedoch bei der in Figur 5 gezeigten Milchförderrregelung weggelassen, andere Merkmale sind anders ausgestaltet bzw. kommen hinzu. Siehe dazu die nachfolgende Beschreibung.

Der Kaffeevollautomat weist ein kombiniertes Förder- und Erhitzersystem 5-10 auf (anstelle einer getrennten Fördereinrichtung 5 sowie eines Erhitzersystems 10 bei Figur 4). Dieses kombinierte System ist als Venturi-Dampfstrahlpumpe ausgebildet (die nachfolgend das Bezugszeichen 5-10 trägt, wobei die grundlegende Funktionsweise des Venturi-Prinzips dem Fachmann bekannt ist).

Bei Figur 5 entfällt das Element 5' (samt dessen Verbindung 8 zur Einheit 6). Der Regelungsweg 12 kann vorhanden sein oder nicht. Die elektrische Heizenergiezuführung 11 (samt deren Daten- und Steuerverbindung zur Erhitzereinrichtung 10 einerseits und zur Einheit 6 andererseits) entfällt ebenso. Anders gestaltet ist die Milchzufuhr und das Verwenden des Heißdampfs über das Ventil 7. Hinzu kommt ein Luftzuleiten (zum Aufschäumen der Milch) 30 bis 33.

Der Eingang 1 des Mediums Milch erfolgt aus einem "Bag-in-Box"-System 40, aus dem die Milch wie zu Figur 4 beschrieben in ein US-DFSM 4 integrierend einen Temperatursensor 9 fließt (Eingang 20 und Ausgang 22 hier nicht mit Bezugszeichen versehen). Die das Messsystem 4 verlassende Milch tritt stromabwärtsseitig des Systems 4 in die Venturi-Dampfstrahlpumpe 5-10 ein (Eintrittsleitung 37). Diese Leitung 37 mündet, ebenso wie die kombinierte Dampf-Luft-Leitung 35, in die Mischkammer 36 der Venturi-Dampfstrahlpumpe 5-10. Je nach Auswahl der Zufuhr der Medien Luft und/oder Dampf (vermittels der regelbaren Ventile 32 und 7) erfolgt in der Mischkammer 36 ein Erhitzen der Milch (über Heißdampf) und/oder ein Aufschäumen der (erhitzten oder auch der nicht erhitzten) Milch über eine Luftzufuhr. Die so in ihrer Konsistenz veränderte Milch verlässt die Mischkammer 36 beziehungsweise die Venturi-Dampfstrahlpumpe 5-10 über die Ausflussleitung 38, die über den Ausgang 3 in ein hier nicht gezeigtes externes Gefäß (z. B. Tasse) führt; dies erfolgt ebenso wie bei Figur 4.

Über die bidirektionale Daten- und Steuerverbindung 8 zwischen der Einheit 6 einerseits und der Venturi-Dampfstrahlpumpe 5-10 andererseits vermag die Einheit 6 auf Basis der mittels des Durchflussmesssystems 4 (das wiederum den Temperatursensor 9 integriert, vergleiche Figur 3) gewonnenen Parameter-Messdaten (z.B. momentane Durchflussgeschwindigkeiten und Temperaturen der durchfließenden Milch) erfindungsgemäß die kombinierte Förder- und Erhitzereinheit 5-10 zu regeln. Basierend auf diesen erfassten Parametern kann (ebenfalls über bidirektionale Daten- und Steuerleitungen 8 zwischen der Einheit 6 einerseits und den beiden Ventile 32 und 7 andererseits) auch eine Regelung der Luftzufuhr 31 und/oder der Heißdampfzufuhr (über das Ventil 7) erfolgen. Hierzu kann der Öffnungsgrad des Ventils 32 ebenso geregelt werden, wie der Öffnungsgrad des Ventils 7.

Die Luftzufuhr erfolgt aus einer Druckluftquelle 30 über die Druckluftleitung 31 und über das Ventil 32 sowie den stromabwärts dieses Ventils positionierten Druckluftleitungsabschnitt 33. Die Heißdampfzufuhr erfolgt aus der Heißdampfquelle 2 über das Ventil 7 in den stromabwärts des Ventils 7 angeordneten Heißdampfleitungsabschnitt 34. Die beiden Leitungsabschnitte 33 und 34 vereinigen sich in einem gemeinsamen Leitungsabschnitt, der die Einlassseite der Mischkammer 36 bzw. der Venturi-Dampfstrahlpumpe 5-10 bildet (die Leitung 37 ist somit die Milch-Ansaugleitung bzw. das Abnahmerohr der Pumpe 5-10, die Leitung 38 der Auslass derselben).

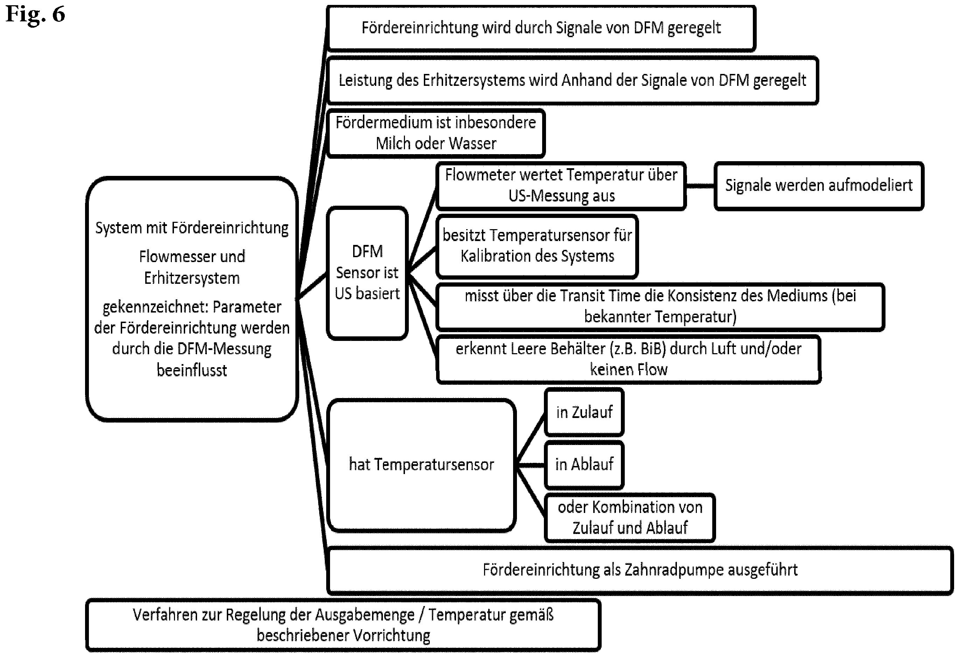

Figur 6 zeigt schließlich zeigt erfindungsgemäße und nicht-erfindungsgemäße Varianten..

## Patentansprüche

1. Getränkebereiter umfassend
eine Fördereinrichtung (5) zum Fördern eines Fluids (F),
und
ein Durchflussmesssystem (4) zum Erfassen eines oder mehrerer einen Durchfluss des Fluids (F) kennzeichnenden/r Parameter(s), sowie eines oder mehrerer einen Zustand des Fluids (F) kennzeichnenden Parameter(s),
wobei die Fördereinrichtung (5) unter Verwendung der erfassten Parameter regelbar ist,
wobei das Durchflussmesssystem (4) einen
a) Ultraschall-Durchflussmesser aufweist, mit dem mindestens ein den Durchfluss des Fluids (F) kennzeichnender Parameter erfassbar ist; und/oder
b) Magnetisch-Induktiven-Durchflussmesser aufweist, mit dem mindestens ein den Durchfluss des Fluids (F) kennzeichnender Parameter erfassbar ist,
**dadurch gekennzeichnet, dass**
mit dem Durchflussmesssystem (4) als einer oder mehrere einen Zustand des Fluids (F) kennzeichnenden/r Parameter ein Parameter erfassbar ist, der angibt, ob Gas- oder Luftblasen im Fluid (F) enthalten sind,
wobei die Fördereinrichtung (5) eine Milchfördereinrichtung zum Fördern von Milch als Fluid (F) ist,
wobei das Durchflussmesssystem (4) zum Erfassen eines oder mehrerer den Durchfluss von Milch, eine Eigenschaft der durchfließenden Milch und/oder einen Zustand der durchfließenden Milch kennzeichnenden/r Parameter(s) ausgebildet ist, und
dass unter Verwendung des/der erfassten Parameter(s) die Milchfördereinrichtung regelbar ist.

2. Getränkebereiter nach dem vorhergehenden Anspruch
**dadurch gekennzeichnet, dass**
das Durchflussmesssystem (4) zusätzlich zum Erfassen einer oder mehrerer Temperatur(en) als ein/mehrere den Zustand des Fluids (F) kennzeichnende(r) Parameter ausgebildet ist und dass die Fördereinrichtung (5) unter Verwendung der einen oder der mehreren erfassten Temperatur(en), zusätzlich zur Verwendung des einen oder der mehreren den Durchfluss des Fluids (F) kennzeichnenden Parameter(s), steuerbar ist, bevorzugt regelbar ist.

3. Getränkebereiter nach einem der vorhergehenden Ansprüche
**gekennzeichnet durch**
ein Erhitzersystem (10), wobei zusätzlich zur Fördereinrichtung (5) auch dieses Erhitzersystem (10) unter Verwendung eines der oder mehrerer der erfassten Parameter zumindest steuerbar, bevorzugt sogar regelbar ist,
wobei bevorzugt in einer Ausbildung gemäß des vorhergehenden Anspruchs das Erhitzersystem (10) unter Verwendung der einen oder der mehreren erfassten Temperatur(en) steuerbar ist, bevorzugt regelbar ist.

4. Getränkebereiter nach dem vorhergehenden Anspruch
**gekennzeichnet durch**
ein kombiniertes Förder- und Erhitzersystem, insbesondere ausgebildet als oder umfassend eine Venturi-Dampfstrahlpumpe (5-10).

5. Getränkebereiter nach einem der vorhergehenden Ansprüche nach einer Variante mit Ultraschall-Durchflussmesser,
**dadurch gekennzeichnet, dass**
der Ultraschall-Durchflussmesser einen Temperatursensor (9) aufweist, insbesondere integriert, zum Erfassen einer oder mehrerer Temperatur(en) als ein/mehrere den Zustand des Fluids (F) kennzeichnende(r) Parameter.

6. Getränkebereiter nach einem der vorhergehenden Ansprüche
**dadurch gekennzeichnet, dass**
mit dem Durchflussmesssystem (4)
als einer oder mehrere einen/den Durchfluss des Fluids (F) kennzeichnende(r) Parameter (ein) Volumendurchfluss/-flüsse, (ein) Massedurchfluss/-flüsse, (ein) Volumenstrom/-ströme und/oder (eine) Fließgeschwindigkeit(en)
und/oder
als einer oder mehrere (eine) Eigenschaft(en) des Fluids (F) kennzeichnende(r) Parameter (eine) Temperatur(en)
erfassbar ist/sind.

7. Getränkebereiter nach einem der vorhergehenden Ansprüche
**dadurch gekennzeichnet, dass**
der Getränkebereiter ist oder umfasst:
• eine elektrische Kaffeemaschine, insbesondere ein(en) Kaffeevollautomat(en) oder
• ein(en) Milchaufschäumer.

8. Verfahren zum Regeln einer Getränkezubereitung, insbesondere vermittels eines Getränkebereiters, umfassend
ein Fördern eines Fluids (F) vermittels einer Fördereinrichtung (5), und
ein Erfassen eines oder mehrerer einen Durchfluss des Fluids (F)und einen Zustand des Fluids (F) kennzeichnender Parameter, vermittels eines Durchflussmesssystems (4),
**dadurch gekennzeichnet, dass**
die Fördereinrichtung (5), unter Verwendung der erfassten Parameter geregelt wird,
wobei ein Getränkebereiter gemäß einem der Ansprüche 1 bis 7 zum Regeln eingesetzt wird.

## Claims

1. Beverage-making machine, comprising
a conveying device (5) for conveying a fluid (F),
and
a flow measuring system (4) for detecting one or more parameters characteristic of a flow of the fluid (F) and one or more parameters characteristic of a condition of the fluid (F),
wherein the conveying device (5) can be regulated using the detected parameter(s),
wherein the flow measuring system (4) comprises
a) an ultrasonic flow meter, by which at least one parameter characteristic of the flow of the fluid (F) can be detected; and/or
b) a magnetic-inductive flow meter, by which at least one parameter characteristic of the flow of the fluid (F) can be detected,
**characterized in that**
a parameter which indicates whether gas bubbles or air bubbles are contained in the fluid (F) can be detected by the flow measuring system (4) as one or more parameters characteristic of a condition of the fluid (F),
the conveying device (5) is a milk conveying device for conveying milk as the fluid (F),
wherein the flow measuring system (4) is designed to detect one or more parameters characteristic of the flow of milk, one or more parameters characteristic of a property of the milk flowing therethrough, and/or one or more parameters characteristic of a condition of the milk flowing therethrough, and
**in that** the milk conveying device can be regulated using the detected parameter(s).

2. Beverage-making machine according to the preceding claim,
**characterized in that**
the flow measuring system (4) is additionally designed to detect one or more temperatures as one or more parameters characteristic of the condition of the fluid (F), and **in that** the conveying device (5) can be controlled, preferably can be regulated, using the one or more detected temperatures, in addition to using the one or more parameters characteristic of the flow of the fluid (F).

3. Beverage-making machine according to any one of the preceding claims,
**characterized by**
a heating system (10), wherein, in addition to the conveying device (5), also this heating system (10) can at least be controlled, preferably can even be regulated, using one or more of the detected parameters,
wherein preferably in an embodiment according to the preceding claim the heating system (10) can be controlled, preferably can be regulated, using the one or more detected temperatures.

4. Beverage-making machine according to the preceding claim,
**characterized by**
a combined conveying and heating system, in particular designed as or comprising a Venturi steam jet pump (5-10).

5. Beverage-making machine according to any one of the preceding claims according to a variant having an ultrasonic flow meter,
**characterized in that**
the ultrasonic flow meter has a temperature sensor (9), in particular integrated therein, for detecting one or more temperatures as one or more parameters characteristic of the condition of the fluid (F).

6. Beverage-making machine according to any one of the preceding claims,
**characterized in that**
one or more volume flows, one or more mass flows, one or more volume streams and/or one or more flow rates can be detected as one or more parameters characteristic of the flow of the fluid (F)
and/or
one or more temperatures can be detected as one or more parameters characteristic of one or more properties of the fluid (F) by the flow measuring system (4).

7. Beverage-making machine according to any one of the preceding claims,
**characterized in that**
the beverage-making machine is or comprises:
• an electric coffee machine, in particular a fully automatic coffee machine or
• a milk frother.

8. Method for regulating the preparation of a beverage, in particular by means of a beverage-making machine, which comprises
conveying a fluid (F) by means of a conveying device (5), and
detecting one or more parameters characteristic of a flow of the fluid (F) and of a condition of the fluid (F) by means of a flow measuring system (4),
**characterized in that**
the conveying device (5) is regulated using the detected parameters,
wherein a beverage-making machine according to any one of claims 1 to 7 is used for the regulation.

## Revendications

1. Préparateur de boissons, comprenant
un dispositif de transport (5) destiné à transporter un fluide (F),
et
un système de mesure de débit (4) destiné à capter un ou plusieurs paramètre(s) caractérisant un débit du fluide (F) ainsi qu'un ou plusieurs paramètre(s) caractérisant un état du fluide (F),
le dispositif de transport (5) pouvant être régulé avec utilisation des paramètres captés,
le système de mesure de débit (4)
a) comportant un débitmètre à ultrasons avec lequel au moins un paramètre caractérisant le débit du fluide (F) peut être capté ; et/ou
b) comportant un débitmètre magnéto-inductif avec lequel au moins un paramètre caractérisant le débit du fluide (F) peut être capté,
**caractérisé en ce que**
avec le système de mesure de débit (4), un paramètre peut être capté en tant qu'un ou plusieurs paramètre(s) caractérisant un état du fluide (F), qui indique si des bulles de gaz ou d'air sont contenues dans le fluide (F),
dans lequel le dispositif de transport (5) est un dispositif de transport de lait pour transporter du lait en tant que fluide (F),
dans lequel le système de mesure de débit (4) est constitué pour capter un ou plusieurs paramètre(s) caractérisant le débit du lait, une propriété du lait qui s'écoule et/ou un état du lait qui s'écoule, et
**en ce que**, avec utilisation du/des paramètre(s) captés, le dispositif de transport de lait peut être régulé.

2. Préparateur de boissons selon la revendication précédente,
**caractérisé en ce que**
le système de mesure de débit (4) est en plus constitué pour capter une ou plusieurs température(s) en tant qu'un ou plusieurs paramètre(s) caractérisant l'état du fluide (F), et **en ce que** le dispositif de transport (5) peut être commandé, de préférence régulé, avec utilisation de la ou des plusieurs température(s) captées en plus de l'utilisation du ou des plusieurs paramètre(s) caractérisant le débit du fluide (F).

3. Préparateur de boissons selon l'une des revendications précédentes,
**caractérisé par**
un système de chauffage (10), ce système de chauffage (10) pouvant lui aussi, en plus du dispositif de transport (5), au moins être commandé, de préférence même régulé, avec utilisation d'un des paramètres ou des plusieurs paramètre(s) captés,
le système de chauffage (10), de préférence dans une réalisation selon la revendication précédente, pouvant être commandé, de préférence régulé avec utilisation d'une ou des plusieurs températures captées.

4. Préparateur de boissons selon la revendication précédente,
**caractérisé par**
un système de transport et de chauffage combiné, en particulier constitué en tant que pompe à jet de vapeur à effet Venturi (5-10), ou comprenant une telle pompe.

5. Préparateur de boissons selon l'une des revendications précédentes selon une variante avec débitmètre à ultrasons,
**caractérisé en ce que**
le débitmètre à ultrasons comporte, en particulier intègre, un capteur de température (9) pour capter une ou plusieurs température(s) en tant que paramètre/ plusieurs paramètres caractérisant l'état du fluide (F).

6. Préparateur de boissons selon l'une des revendications précédentes,
**caractérisé en ce que**
avec le système de mesure de débit (4),
un/des débit(s) volumique(s), un/des débit(s) massique(s), un/des flux volumique(s) et/ou une/des vitesse(s) d'écoulement peut/peuvent être capté(s) en tant qu'un ou plusieurs paramètre(s) caractérisant un/le débit du fluide
et/ou
une/des température(s) peut/peuvent être captée(s) en tant que paramètre ou plusieurs paramètres caractérisant une/des propriété(s) du fluide (F).

7. Préparateur de boissons selon l'une des revendications précédentes,
**caractérisé en ce que**
le préparateur de boissons est ou comprend :
• une machine à café électrique, en particulier une machine à café entièrement automatique ou
• un mousseur à lait.

8. Procédé destiné à réguler une préparation de boisson, en particulier au moyen d'un préparateur de boissons, comprenant
un transport d'un fluide (F) au moyen d'un dispositif de transport (5), et
un captage d'un ou des plusieurs paramètre(s) caractérisant un débit du fluide (F) et un état du fluide (F), au moyen d'un système de mesure de débit (4),
**caractérisé en ce que**
le dispositif de transport (5) est régulé, avec utilisation des paramètres captés,
un préparateur de boissons selon l'une des revendications 1 à 7 étant mis en oeuvre pour la régulation.
